# EUROPÄISCHE PATENTANMELDUNG

(11) **EP 2 474 810 A1**
(43) Veröffentlichungstag der Anmeldung: **11.07.2012**
(21) Anmeldenummer: 11150580.6
(22) Anmeldetag: 11.01.2011
(51) Int. Cl.: G01C 15/00

(54) **Vermessungsgerät mit einer dynamischen Anzielfunktionalität**

(71) Anmelder: Leica Geosystems AG, 9435 Heerbrugg (CH)
(72) Erfinder: Schorr, Christian, CH-9000, St. Gallen (CH); Schroeder, Frank, CH-9435, Heerbrugg (CH)
(74) Vertreter: Harmann, Bernd-Günther

(57) **Zusammenfassung**

Erfindungsgemäss ist ein Konstruktionsvermessungsgerät (10) mit einer Funktionalität zur manuell steuerbaren Ausrichtungsänderung ein Anzieleinheit (13) ausgestattet, in deren Rahmen dynamisch in Abhängigkeit von einer aktuellen Richtung und einem aktuellen Abstand von einem definierten zentralen Anker-Displaypunkt zu einem aktuell markierten Displaypunkt die Ausrichtung der Anzieleinheit (13) durch den ersten bzw. zweiten Drehantrieb geändert wird, wobei die jeweils aktuelle Richtung eine Ausrichtungsänderungs-Richtung und der jeweils aktuelle Abstand eine Ausrichtungsänderungs-Geschwindigkeit für das Ändern der Ausrichtung der Anzieleinheit (13) vorgibt.

## Beschreibung

Die Erfindung betrifft ein Konstruktionsvermessungsgerät zum Vermessen und/oder Markieren von Raumpunkten von Oberflächen einer Konstruktion - insbesondere Innenräumen von Gebäuden - nach dem Oberbegriff des Anspruchs 1 sowie ein zugehöriges Verfahren zum manuell gesteuerten Ausrichten einer Anzieleinheit eines Vermessungsgeräts anhand eines Markierens von Displaypunkten auf einem Display nach dem Oberbegriff des Anspruchs 10 und ein zugehöriges Computerprogrammprodukt nach dem Oberbegriff des Anspruchs 15.

Aus dem Stand der Technik sind einfache
Konstruktionsvermessungsgeräte mit einer Anzieleinrichtung bekannt, mithilfe derer manuell ein Raumpunkt, z.B. ein Eckpunkt, angezielt wird und die Anzielrichtung dann manuell zu einem nächsten zu vermessenden Raumpunkt, z.B. einem weiteren Eckpunkt, verändert wird.

Die DE 196 48 626 beispielsweise offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp- und Dreheinrichtung zur Ausrichtung und Richtungsmessung, ein Zielfernrohr sowie eine elektronische Auswerteeinheit zur Winkeldaten-, Entfernungsdatenerfassung und Datenübergabe an einen Computer. Für die Vermessung eines Raumes wird das Gerät an einer zentralen Stelle des Raumes positioniert, von der aus alle zu erfassenden Raum-und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr. Eine automatisierte sequentielle Vermessung mehrerer Raumpunkte, zu vergleichen beispielsweise mit einem Scan, wird in der DE 196 48 626 nicht offenbart.

Eine ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es wird jedoch auch in diesem Dokument keine automatisierte sequentielle Vermessung mehrerer Raumpunkte, zu vergleichen beispielsweise mit einem Scan, offenbart.

In der EP 1 733 185 werden eine Vorrichtung und ein Verfahren offenbart, womit speziell Kanten auf einer polygonalen, ansonsten ebenen Oberfläche genau vermessen werden sollen. Es wird jedoch keine automatisierte sequentielle Vermessung mehrerer Raumpunkte offenbart.

Bekannte Konstruktionsvermessungsgeräte umfassen typischerweise eine Basis, ein an der Basis um eine Drehachse drehbar gelagertes Oberteil und eine um eine Schwenkachse schwenkbar gelagerte Anzieleinheit mit einer zur Emission eines Laserstrahls ausgebildeten Laserquelle und einem bildgebenden Detektor, beispielsweise ausgestattet mit einer Ausrichtungsanzeigefunktionalität zur Angabe einer Ausrichtung der Anzieleinheit auf einen Raumpunkt als Anzielpunkt, sowie einem
Entfernungsbestimmungsdetektor zur Bereitstellung einer Distanzmessfunktionalität. Bei der
Ausrichtungsanzeigefunktionalität kann es sich beispielsweise um ein Fadenkreuz im Sucher einer Kamera als bildgebendem Detektor handeln.

Moderne, automatisierte Konstruktionsvermessungsgeräte umfassen des Weiteren Drehantriebe, welche das Oberteil bzw. die Anzieleinheit motorisiert antreibbar machen, Winkelmesser und gegebenenfalls Neigungssensoren zur Bestimmung der räumlichen Ausrichtung der Anzieleinheit, sowie eine Auswerte- und Steuereinheit, welche mit der Laserquelle, dem Entfernungsbestimmungsdetektor sowie den Winkelmessern und gegebenenfalls Neigungssensoren verbunden ist.

Dabei ist die Auswerte- und Steuereinheit beispielsweise mit einem Display mit Eingabemitteln zur Eingabe von Steuerbefehlen eines Benutzers auf dem Display und zur Darstellung eines Bildes des bildgebenden Detektors bzw. der Kamera auf dem Display ausgestattet, wobei die Ausrichtung der Anzieleinheit mittels der Ausrichtungsanzeigefunktionalität auf dem Display z.B. mittels Überblendung anzeigbar ist. Es sind Funktionalitäten bekannt, bei denen die Eingabemittel auf dem Display als vier grosse flächige Pfeile ausgebildet sind, deren Markierung bzw. Berührung es einem Benutzer ermöglichen, die Ausrichtung der Anzieleinheit in horizontaler oder vertikaler Richtung zu verändern. Eine Ausrichtungsänderung in beliebiger Richtung, nicht ausschliesslich in horizontaler oder vertikaler Richtung, kann basierend auf einer solchen Funktionalität jedoch zeitaufwendig und schwierig handhabbar sowie wenig intuitiv zu bedienen sein.

Aufgabe der Erfindung ist die Bereitstellung eines Vermessungsgeräts und eines zugehörigen Verfahrens zum Vermessen und/oder Markieren von Raumpunkten auf Oberflächen einer Konstruktion mit einer verbesserten Funktionalität zur Änderung der Ausrichtung der Anzieleinheit, welche einem Benutzer einen erhöhten Bedienungskomfort bietet und insbesondere anhand welcher der Benutzer schneller den gewünschten Zielpunkt im Raum - zumindest grob - anfahren kann.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Gegenstand der Erfindung ist ein Vermessungsgerät (insbesondere Konstruktionsvermessungsgerät) zum Vermessen und/oder Markieren von Raumpunkten auf Oberflächen einer Konstruktion, insbesondere Innenräumen von Gebäuden. Das Gerät umfasst eine Basis und ein einer gegenüber der Basis dreh- und schwenkbaren, Distanzmessfunktionalität bereitstellenden Anzieleinheit mit einer zur Emission eines Laserstrahls in Richtung einer Zielachse ausgebildeten Laserquelle und einem Laserlichtdetektor sowie mit einer in Richtung der Zielachse ausgerichteten integrierten digitalen Kamera.

Insbesondere ist ein an der Basis um eine Drehachse innerhalb eines Winkelbereichs eines Azimutal- bzw. Horizontalwinkels drehbar gelagertes Oberteil vorhanden und ist die Anzieleinheit am Oberteil um eine Schwenkachse innerhalb eines Winkelbereichs eines Elevations- bzw. Vertikalwinkels schwenkbar gelagert angeordnet.

Das erfindungsgemässe Vermessungsgerät umfasst des Weiteren eine Auswerte- und Steuereinheit, ein Display zur Darstellung eines Bildes der Kamera sowie Eingabemittel zur Markierung von Displaypunkten auf dem Display (sodass durch einen Benutzer z.B. Steuerbefehle eingegeben werden können). Die Eingabemittel sind dabei insbesondere derart gestaltet, dass - mit einer bestimmten Auflösung - Punkte auf dem gesamten Display (d.h. auf der gesamten Displayfläche) markierbar sind (z.B. analog zur Computermaus, einem Touch-Screen, einem Track-Ball, o.ä.). Wie dem Fachmann bekannt kann dabei die Auflösung von markierbaren Displaypunkten mit der Bildschirmauflösung (Bildschirm-Pixel) an sich zwar im Speziellen übereinstimmen jedoch kann die genauso die Auflösung von markierbaren Displaypunkten auch geringer wie die Auflösung von überhaupt auf dem Bildschirm darstellbarer Pixel sein.

Der jeweils aktuell mit der Zielachse anvisierte Raumpunkt kann dabei im Betriebszustand auf dem Display im Bild abgebildet werden (in einem Ziel-Bildpunkt), insbesondere indiziert anhand eines Fadenkreuzes.

Das Gerät umfasst einen ersten und zweiten Drehantrieb, welche das Oberteil bzw. die Anzieleinheit antreibbar bzw. in einem Azimut- und einem Elevationswinkel ausrichtbar machen. Eine räumliche Ausrichtung der Anzieleinheit gegenüber der Basis ist über zwei Winkelmesser zur Bestimmung der horizontalen und vertikalen Ausrichtung, d.h. des Azimut- und des Elevationswinkels, erfassbar. Die Auswerte- und Steuereinheit ist mit der Laserquelle, dem Laserlichtdetektor sowie den Winkelmessern verbunden, um eine erfasste Distanz einer entsprechenden Ausrichtung (d.h. dabei erfassten Azimut- und Elevationswinkeln) zuzuordnen und somit Koordinaten für Raumpunkte zu bestimmen. Zudem ist die Auswerte- und Steuereinheit auch mit der Kamera verbunden.

Zusätzlich kann das Gerät - insbesondere in die Basis des Geräts integriert - optional mit Neigungssensormittel ausgestattet sein, deren Messdaten dann ebenfalls an die Auswerte- und Steuereinheit übermittelt werden. Damit kann zusätzlich die aktuelle Ausrichtung des Geräts (d.h. eine Neigung der Basis) bezüglich des Schwerefeld-Vektors der Erde bestimmt und zur Kompensation einer nicht exakt horizontal erfolgten Aufstellung des Geräts verwendet werden. Wie dem Fachmann bekannt, können die Neigungssensormittel dabei dazu ausgebildet sein, die Neigung gegenüber dem Schwerefeld (bzw. gegenüber einer senkrecht zum Schwerefeld ausgerichteten Horizontalebene) in zwei Richtungen (d.h. um zwei Achsen) zu bestimmen. Beispielsweise können dafür zwei ein-achsige Neigungssensoren oder ein zwei-achsiger Neigungssensor verwendet werden (wie optoelektronische Libellensensoren, ein optoelektronischer Öltopf oder eine optoelektronische Dosenlibelle). Ein Beispiel für einen solchen öltopfartigen Neigungssensor, mit welchem die Neigung zumindest um zwei Achsen bestimmen kann, ist detailliert in der Europäischen Patentanmeldung mit dem Anmeldungs-Aktenzeichen EP 10173726.0 beschrieben.

Erfindungsgemäss weist das Konstruktionsvermessungsgerät eine Funktionalität (dynamische Anzielfunktionalität) auf, in deren Rahmen dynamisch in Abhängigkeit von
● einer aktuellen Richtung und
● einem aktuellen Abstand
   von einem definierten zentralen Anker-Displaypunkt zu einem aktuell markierten Displaypunkt die Ausrichtung der Anzieleinheit durch den ersten bzw. zweiten Drehantrieb geändert wird, wobei
● die jeweils aktuelle Richtung eine Ausrichtungsänderungs-Richtung und
● der jeweils aktuelle Abstand eine Ausrichtungsänderungs-Geschwindigkeit
   für das Ändern der Ausrichtung der Anzieleinheit vorgibt.

Insbesondere kann jener Displaypunkt als der Anker-Displaypunkt definiert sein, der die Position der Zielachse im Bild und somit einen Ziel-Bildpunkt repräsentiert, insbesondere wobei dieser auf dem Display durch ein dem Bild überlagert darstellbares Fadenkreuz indiziert wird. Alternativ kann im Rahmen der Funktionalität jedoch auch vorgesehen sein, dass der Benutzer selbst einen beliebigen Displaypunkt als den Anker-Displaypunkt definieren kann. Die Funktionalität kann dabei derart ausgestaltet sein, dass diese durch Markieren des den Ziel-Bildpunkt darstellenden Displaypunkts bzw. des Fadenkreuzes aktivierbar ist.

Vorzugsweise ist das Display als ein berührungssensitiver Touch-Bildschirm (Touch-Screen) ausgebildet, auf dem Displaypunkte auf der gesamten Fläche des Displays durch Berührung markierbar sind, und somit die Eingabemittel bereitgestellt werden.

Erfindungsgemäss erfolgt die Änderung der Ausrichtung der Anzieleinheit in horizontaler und vertikaler Richtung entsprechend der Richtung vom definierten zentralen Anker-Displaypunkt zu dem jeweils aktuell markierten Bildpunkt. Dabei wird bevorzugt, dass die Ausrichtungsänderung mit einer maximalen Geschwindigkeit bei einem maximalen Abstand des markierten Bildpunkts zum Ankerpunkt erfolgt und die Geschwindigkeit der Ausrichtungsänderung gleich Null ist, d.h. dass keine Richtungsänderung erfolgt, wenn der erste und der zweite markierte Bildpunkt zusammenfallen, d.h. identisch sind.

Gemäss einer möglichen Ausführungsform des erfindungsgemässen Konstruktionsvermessungsgeräts ist das Display mittels eines virtuellen Liniennetzes in virtuelle Sektoren eingeteilt, welche durch konzentrische Kreislinien um den Anker-Displaypunkt (wie z.B. den Fadenkreuzmittelpunkt) und diese Kreislinien schneidende, vom Anker-Displaypunkt ausgehende Radiallinien gebildet werden. Dabei entsprechen die Sektoren digitalisierten Unterschieden für eine Änderung der Ausrichtung der Anzieleinheit von dem ersten anvisierten Raumpunkt auf andere Raumpunkte in horizontaler und vertikaler Richtung, und die Änderung der Ausrichtung der Anzieleinheit wird solange vollzogen, wie der andere Bildpunkt in einem Sektor kontinuierlich markiert wird.

Gemäss dieser Ausführungsform der Erfindung entsprechen die konzentrischen Kreislinien um den Anker-Displaypunkt unterschiedlichen Entfernungen zum aktuell markierten Bildpunkt, womit Geschwindigkeitsstufen für die Richtungsänderung der Anzieleinheit festgelegt werden, wobei äussere Kreislinien maximalen Geschwindigkeitsstufen entsprechen, so dass die Richtungsänderung bei Markierung äusserer Bildpunkte, nach Aktivierung der dynamischen Anzielfunktionalität, mit einer festgelegten maximalen Geschwindigkeit erfolgt, so lange wie dieser andere Bildpunkt markiert wird.

Typischerweise umfasst die Distanzmessfunktionalität einen elektronischen Distanzmesser.

Optional kann das virtuelle Liniennetz für einen Benutzer sichtbar auf dem Display einem aktuellen Kamerabild überlagert darstellbar sein.

Ein weiterer Gegenstand der Erfindung ist ein Verfahren zum manuell gesteuerten Ausrichten einer Anzieleinheit eines Vermessungsgeräts anhand eines Markierens von Displaypunkten auf einem Display, wobei das Vermessungsgerät - wie zuvor beschrieben - aufweist:
● eine Basis,
● die gegenüber der Basis dreh- und schwenkbare, Distanzmessfunktionalität bereitstellende Anzieleinheit mit einer zur Emission eines Laserstrahls in Richtung einer Zielachse ausgebildeten Laserquelle und einem Laserlichtdetektor sowie mit einer in Richtung der Zielachse ausgerichteten integrierten digitalen Kamera,

● einer Auswerte- und Steuereinheit,
● das Display zur Darstellung eines Bildes der Kamera, und
● Eingabemitteln zur Markierung der Displaypunkte,
   wobei
● ein erster und ein zweiter Drehantrieb die Anzieleinheit antreib- und ausrichtbar machen,
● eine räumliche Ausrichtung der Anzieleinheit gegenüber der Basis über zwei Winkelmesser erfassbar ist und
● die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen, sowie mit der Kamera verbunden ist.
   Erfindungsgemäss werden im Rahmen des Verfahrens fortlaufend
● eine aktuelle Richtung und
● ein aktueller Abstand
   von einem definierten zentralen Anker-Displaypunkt zu einem aktuell markierten Displaypunkt bestimmt. In Abhängigkeit von der jeweils aktuellen Richtung und dem jeweils aktuellen Abstand wird dann die Ausrichtung der Anzieleinheit dynamisch durch den ersten bzw. zweiten Drehantrieb geändert, wobei
● die jeweils aktuelle Richtung eine Ausrichtungsänderungs-Richtung und
● der jeweils aktuelle Abstand eine Ausrichtungsänderungs-Geschwindigkeit
   für das Ändern der Ausrichtung der Anzieleinheit vorgibt.

Sämtliche eingangs beschriebene Weiterbildungen bezüglich des erfindungsgemässen Vermessungsgeräts sind analog auch auf das erfindungsgemässe Verfahren anwendbar.

So kann wiederum z.B. jener Displaypunkt als der Anker-Displaypunkt definiert sein, der die Position der Zielachse im Bild und somit einen Ziel-Bildpunkt repräsentiert, insbesondere wobei dieser auf dem Display durch ein dem Bild überlagert darstellbares Fadenkreuz indiziert wird.

Ebenso kann wieder die Ausrichtungsänderungs-Richtung für das Ändern der Ausrichtung der Anzieleinheit analog gewählt werden zur jeweils bestimmten aktuellen Richtung vom Anker-Displaypunkt zum aktuell markierten Displaypunkt, wobei
● die Ausrichtungsänderungs-Richtung eine nach oben gerichtete Komponente enthält - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
● die Ausrichtungsänderungs-Richtung eine nach unten gerichtete Komponente enthält - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
● die Ausrichtungsänderungs-Richtung eine nach links gerichtete Komponente enthält - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -, und
● die Ausrichtungsänderungs-Richtung eine nach rechts gerichtete Komponente enthält - also eine Drehung der Anzieleinheit um eine vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

Des Weiteren kann die Abhängigkeit der Ausrichtungsänderungs-Geschwindigkeit vom jeweils aktuellen Abstand derart definiert sein, dass das Verfahren (d.h. Drehen und/oder Schwenken) der Anzieleinheit mit maximal verfügbarer Geschwindigkeit erfolgt, falls der aktuelle Abstand vom aktuell markierten Displaypunkt zum Anker-Displaypunkt maximal ist, und bei Zusammenfallen des aktuell markierten Displaypunkts mit dem Anker-Displaypunkt die Ausrichtungsänderungs-Geschwindigkeit gleich Null ist, d.h. dass dann in der aktuellen Ausrichtung der Anzieleinheit innegehalten wird.

Ein weiterer Gegenstand der Erfindung ist ein Computerprogrammprodukt mit Programmcode, der auf einem maschinenlesbaren Träger gespeichert ist, zur Durchführung des erfindungsgemässen Verfahrens zum manuell gesteuerten Ausrichten einer Anzieleinheit eines Vermessungsgeräts anhand eines Markierens von Displaypunkten auf einem Display, nach einer der vorgenannten Ausführungsformen, insbesondere wenn das Programm auf einer als Auswerte- und Steuereinheit des erfindungsgemässen, oben beschriebenen Vermessungsgeräts ausgebildeten elektronischen Datenverarbeitungseinheit ausgeführt wird.

Die vorliegende Erfindung erlaubt es einem Bediener in einfacher Weise die Ausrichtung der Anzieleinheit zu verändern. Eine sequentielle Eingabe von Befehlen für eine Ausrichtungsänderung in horizontaler und vertikaler Richtung ist nicht erforderlich, sondern die Anzieleinheit kann erfindungsgemäss durch einfache Markierung auf dem Display in beliebiger, z.B. diagonaler, Richtung verfahren werden (zudem können die gewählte Richtung und Geschwindigkeit für das Verfahren dynamisch durch Verschieben der Markierung (d.h. Markierung eines anderen Displaypunkts) ständig angepasst und verändert werden).

Das erfindungsgemässe Konstruktionsvermessungsgerät und das
erfindungsgemässe Verfahren zum Vermessen
und/oder Markieren von Raumpunkten in einer
Konstruktion werden nachfolgend anhand von in den
Zeichnungen schematisch dargestellten konkreten
Ausführungsbeispielen rein beispielhaft näher
beschrieben, wobei auch auf weitere Vorteile der
Erfindung eingegangen wird. Im Einzelnen
illustrieren:
- Figur 1: eine erste Darstellung für eine mögliche Ausführungsform eines erfindungsgemässen Konstruktionsvermessungsgeräts;
- Figur 2: eine zweite Darstellung für eine mögliche Ausführungsform eines erfindungsgemässen Konstruktionsvermessungsgeräts;
- Figur 3: die Funktionsweise der dynamischen Anzielfunktionalität des erfindungsgemässen Konstruktionsvermessungsgeräts und des zugehörigen erfindungsgemässen Verfahrens anhand eines Beispiels.

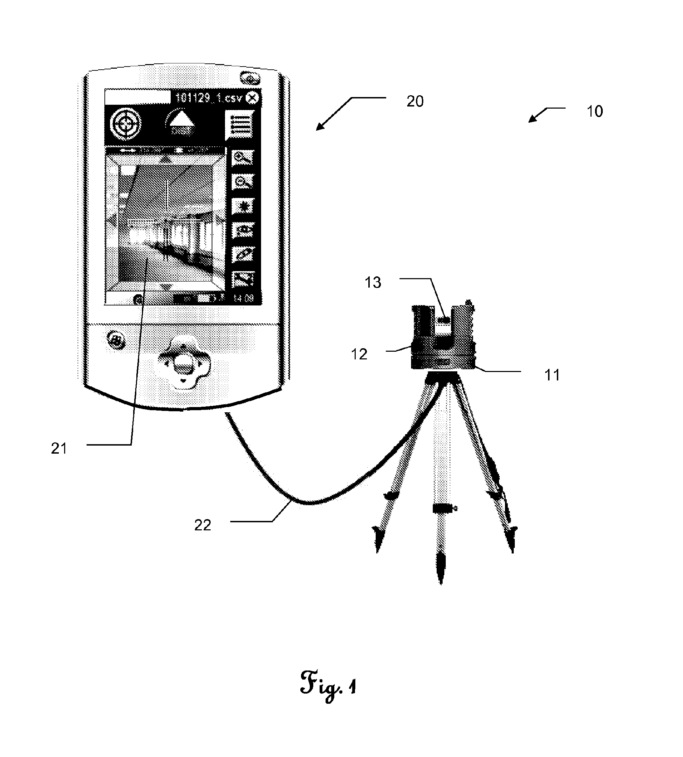

Figur 1 zeigt eine mögliche Ausführungsform eines erfindungsgemässen Konstruktionsvermessungsgeräts 10. Das System 10 umfasst eine Kontrolleinheit 20 mit einer integrierten Auswerte- und Steuereinheit zur Verarbeitung der Daten und mit einem berührungssensitiven Touch-Display 21 zur Anzeige von Daten/Kamerabilder und zur Markierung von Displaypunkten (und Eingabe von Befehlen). Die Kontrolleinheit 20 (als Benutzer-Gerät-Interface) und ein Laserlicht-Detektor bzw. Sensor kommunizieren miteinander. Die Kontrolleinheit 20 und der Laserlicht-Detektor bzw. Sensor können physisch getrennt und mittels drahtloser oder kabelgeführter Kommunikationsverbindungen 22 miteinander verbunden sein oder als eine Einheit bereitgestellt sein. Zur Ausrichtung des Laserstrahls 14 auf zu vermessende oder zu projizierende Raumpunkte kann mindestens der Laserstrahl 14 als ein Messstrahl selbst dienen. Zur Unterstützung eines Bedieners für die Anvisierung eines Raumpunkts kann das Konstruktionsvermessungsgerät 10 zusätzlich mit einer direkten optischen Anzielhilfe, z.B. einem Teleskop, ausgestattet sein.

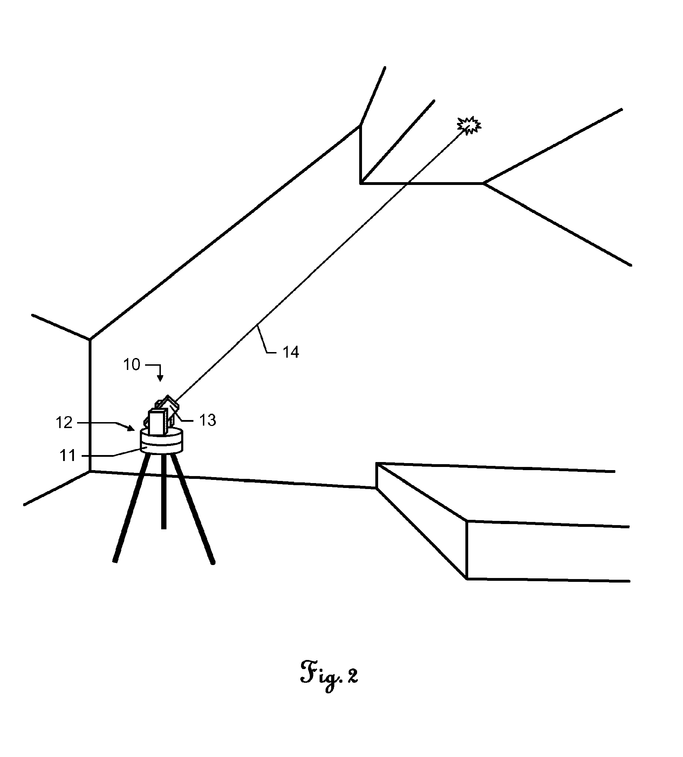

Figur 2 illustriert ein erfindungsgemässes Vermessungsgerät 10 zum Vermessen und/oder Markieren von Raumpunkten von Oberflächen einer Konstruktion, insbesondere von Innenräumen von Gebäuden.

Das Konstruktionsvermessungsgerät 10 umfasst eine Basis 11, die beispielsweise auf einem dreibeinigen Stativ steht, mit einem darauf drehbar gelagerten Oberteil 12. Eine am Oberteil 12 schwenkbar gelagerte Anzieleinheit 13 ist mit einer zu einer Emission eines Laserstrahls 14 ausgebildeten Laserquelle und einem Laserlicht-Detektor als Entfernungsbestimmungsdetektor ausgestattet und stellt damit eine Distanzmessfunktionalität bereit. Die Anzieleinheit 13 umfasst des Weiteren eine integrierte digitale Kamera.

Somit ist also die Anzieleinheit 13 gegenüber der Basis 11 dreh- und schwenkbar (insbesondere also um eine vertikale Stehachse drehbar und um eine horizontale Schwenkachse schwenkbar bzw. neigbar).

Das Konstruktionsvermessungsgerät 10 umfasst ausserdem eine nicht dargestellte Auswerte- und Steuereinheit, wobei - ebenfalls nicht dargestellt - ein erster und ein zweiter Drehantrieb das Oberteil 12 bzw. die Anzieleinheit 13 antreibbar bzw. in einem Azimut- und einem Elevationswinkel ausrichtbar machen. Die räumliche Ausrichtung der Anzieleinheit 13 gegenüber der Basis 11 ist über zwei Winkelmesser erfassbar. Zusätzlich können Neigungssensoren zur Bestimmung der Aufstell-Ausrichtung bzw. Horizontalität der Basis 11 bezüglich des Schwerefeld-Vektors der Erde vorgesehen sein. Die Auswerte- und Steuereinheit ist mit der Laserquelle, dem Laserlicht-Detektor und den Winkelmessern - sowie gegebenenfalls den Neigungssensoren - verbunden, um eine erfasste Distanz und erfasste Azimut-und Elevationswinkel einer entsprechenden Ausrichtung der Anzieleinheit 13 zuzuordnen und somit Koordinaten für Raumpunkte zu bestimmen. Ausserdem ist die Auswerte- und Steuereinheit mit der Kamera verbunden.

Der jeweils aktuell mit der Zielachse 13 anvisierte Raumpunkt kann dabei im Betriebszustand auf dem Display im Bild abgebildet werden (in einem Ziel-Bildpunkt), insbesondere indiziert anhand eines darstellbaren Fadenkreuzes.

Das Kamerabild, in welches also das Fadenkreuz an jener Stelle im Bild eingeblendet sein kann, welche mit der Zielachse korrespondiert, dient somit insbesondere zur Anzielung der gewünschten Zielpunkte im Raum und kann z.B. auf dem Display einer handhaltbaren Fernsteuereinheit für das Konstruktionsvermessungsgerät angezeigt werden (insbesondere als Live-Video-Stream).

Wie dem Fachmann bekannt, kann die Auswerte- und Steuereinheit sowie das Display und die Eingabemittel entweder direkt an der Basis des Geräts angeordnet sein und/oder in eine handhaltbare Fernsteuereinheit integriert sein. Das Vermessungsgerät kann also (entweder ausschliesslich oder zusätzlich zu einem User-Interface mit Display und Eingabemitteln, das direkt an der Basis angeordnet sein kann) eine Fernsteuereinheit mit Eingabemitteln und Display aufweisen.

Erfindungsgemäss weist das Vermessungsgerät 10 nun eine dynamische Anzielfunktionalität auf, in deren Rahmen der Benutzer manuell Steuerbefehle für das Ändern der Ausrichtung der Anzieleinrichtung gegenüber der Basis geben kann. Die dynamische Anzielfunktionalität kann derart ausgestaltet sein, dass diese durch Markieren des Ziel-Bildpunkts bzw. des Fadenkreuzes auf dem Display aktivierbar ist. Nach erfolgter Aktivierung der dynamischen Anzielfunktionalität kann ein Benutzer einen Displaypunkt 4 auf dem Display markieren. Dadurch wird eine dynamische Änderung der Ausrichtung der Anzieleinheit 13 veranlasst, indem - entsprechend der aktuell bestimmten Richtung und dem aktuell bestimmten Abstand vom definierten zentralen Anker-Displaypunkt zum jeweils aktuell markierten Displaypunkt - die azimutale und/oder elevative Ausrichtung motorangetrieben verändert wird.

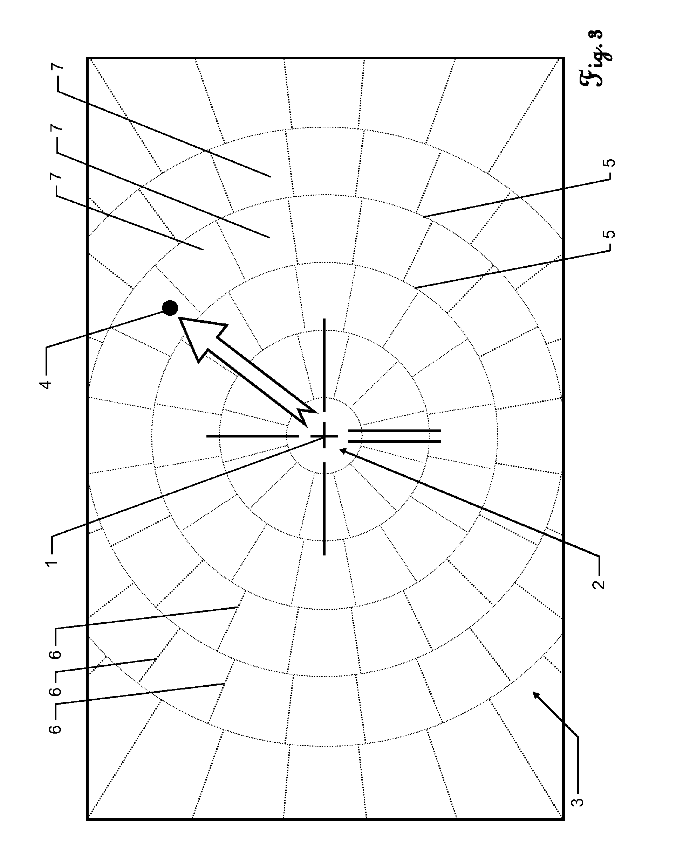

Bei Aufhebung der Markierung, beispielsweise bei Aufhebung der Berührung des Displaypunkts 4 auf einem als Touchscreen ausgebildeten Display (siehe Figur 3), wird die Verfahrung der Anzieleinheit 13 abgebrochen. Ein Benutzer kann - wenn die Funktionalität weiterhin aktiviert bleibt - jedoch jederzeit einen anderen Displaypunkt markieren bzw. berühren, um eine Änderung der Ausrichtung zu veranlassen, die dann wiederum der aktuellen Richtung und dem aktuellen Abstand vom zentralen Anker-Displaypunkt zu diesem markierten anderen Displaypunkt entspricht.

Die Ausrichtungsänderungs-Richtung für das Ändern der Ausrichtung der Anzieleinheit ist dabei dynamisch abhängig von der jeweils aktuell bestimmten Richtung vom Fadenkreuzmittelpunkt (welcher z.B. als zentraler Anker-Displaypunkt definiert sein kann) zum aktuell markierten Displaypunkt 4. D.h., dass die Ausrichtungsänderungs-Richtung dabei dynamisch eingestellt wird analog zur jeweils aktuellen Richtung vom Anker-Displaypunkt zum aktuell markierten Displaypunkt. Somit ergibt sich bei dem analog zur jeweils aktuell bestimmten Richtung (vom Fadenkreuzmittelpunkt zum aktuell markierten Displaypunkt 4) erfolgenden Ändern der Ausrichtung der Anzieleinheit, dass
● die Ausrichtungsänderungs-Richtung eine nach oben gerichtete Komponente enthaltend gewählt/eingestellt wird - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
● die Ausrichtungsänderungs-Richtung eine nach unten gerichtete Komponente enthaltend gewählt/eingestellt wird - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
● die Ausrichtungsänderungs-Richtung eine nach links gerichtete Komponente enthaltend gewählt/eingestellt wird - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -,
● die Ausrichtungsänderungs-Richtung eine nach rechts gerichtete Komponente enthaltend gewählt/eingestellt wird - also eine Drehung der Anzieleinheit um die vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

Die Ausrichtungsänderungs-Geschwindigkeit für das Ändern der Ausrichtung der Anzieleinheit wird dabei eingestellt dynamisch abhängig von der jeweils aktuell bestimmten Entfernung vom aktuell markierten Displaypunkt 4 zum Fadenkreuzmittelpunkt (welcher z.B. als zentraler Anker-Displaypunkt definiert sein kann), insbesondere wobei mit zunehmender Entfernung des aktuell markierten Displaypunkts vom Anker-Displaypunkt jeweils das Verfahren der Anzieleinheit mit höher werdenden Ausrichtungsänderungs-Geschwindigkeiten erfolgt.

Die Geschwindigkeit der Änderung der Ausrichtung kann dabei bei maximaler Entfernung des markierten Displaypunkts 4 vom Ziel-Bildpunkt 1 bzw. Fadenkreuzmittelpunkt (als Anker-Displaypunkt) - d.h. bei Markierung äusserer Displaypunkte auf dem Display - maximal vorgegeben sein, und gleich Null gewählt werden, wenn der aktuell markierte Displaypunkt 4 mit dem Ziel-Bildpunkt 1 bzw. Fadenkreuzmittelpunkt als Anker-Displaypunkt zusammenfällt. Das heisst, dass in letzterem Fall keine Änderung der Ausrichtung der Anzieleinheit 13 (also kein Verfahren der Anzieleinheit) erfolgt.

Wie dem
Gemäss der in Figur 3 illustrierten Ausführungsform der Erfindung ist das Display in ein virtuelles Liniennetz 3 eingeteilt, entsprechend digitalisierten Entfernungen und Richtungen von dem Ziel-Bildpunkt 1 bzw. dem Fadenkreuzmittelpunkt zu Gruppen von Displaypunkten. In der Ausführungsform gemäss Figur 3 ist das virtuelle Liniennetz 3 aus konzentrischen Kreislinien 5 um den Fadenkreuzmittelpunkt und diese Kreislinien schneidende, vom Fadenkreuzmittelpunkt ausgehende Radiallinien 6 gebildet, sodass dadurch das Display in - jeweils eine Gruppe von mehreren Displaypunkten enthaltende - Sektoren 7 aufgeteilt ist. Dabei entsprechen die Sektoren 7 jeweils konkreten Werten für die Ausrichtungsänderungs-Richtung und Ausrichtungsänderungs-Geschwindigkeit beim Änderung der Ausrichtung der Anzieleinheit 13 (d.h. dass den innerhalb eines Sektors liegenden Displaypunkten jeweils der gleiche konkrete Wert für die Ausrichtungsänderungs-Richtung und Ausrichtungsänderungs-Geschwindigkeit zugeordnet ist). Die Änderung der Ausrichtung der Anzieleinheit 13, in vertikaler und, insbesondere gleichzeitig, horizontaler Richtung, in Richtung des in einem Sektor gelegenen anderen markierten Bildpunkts 4 entsprechend einem anderen anzuvisierenden Raumpunkt, wird solange vollzogen, wie dieser andere Bildpunkt kontinuierlich markiert wird. Bei Aufhebung der Markierung, beispielsweise bei Aufhebung der Berührung des Bildpunkts 4 auf einem als Touchscreen ausgebildeten Display, wird die Verfahrung der Anzieleinheit 13 abgebrochen. Ein Benutzer kann jedoch jederzeit einen anderen Displaypunkt in einem anderen Sektor 7 markieren bzw. berühren, um eine Änderung der Ausrichtung der Anzieleinheit 13 entsprechend der diesem Sektor zugeordneten Richtung und Geschwindigkeit für das Ändern der Ausrichtung zu veranlassen.

Weiter aussen liegende Sektoren (die einen grösseren Abstand zum Anker-Displaypunkt aufweisen) entsprechen dabei höheren Ausrichtungsänderungs-Geschwindigkeiten und weiter innen liegende Sektoren (die einen kleineren Abstand zum Anker-Displaypunkt aufweisen) entsprechen dabei geringeren Ausrichtungsänderungs-Geschwindigkeiten. Mit zunehmendem Abstand der jeweiligen Sektoren vom Anker-Displaypunkt (d.h. Fadenkreuzmittelpunkt) nimmt also auch die den Sektoren jeweils zugeordnete Ausrichtungsänderungs-Geschwindigkeit zu.

Dabei kann den durch die äusserste Kreislinie definierten Sektoren auch die höchste Verfahrungsgeschwindigkeit (100%) zugeordnet sein und eine Markierung des Anker-Displaypunkts (also des Fadenkreuzmittelpunkts) eine Verfahrungsgeschwindigkeit von 0 % bedeuten.

Jeder Sektor 7 entspricht des Weiteren einer bestimmten - also diesem zugeordneten - Ausrichtungsänderungs-Richtung der Anzieleinheit 13 (azimutal und elevativ). Bei Markierung bzw. Berührung eines Bildpunkts z.B. rechts des Fadenkreuzmittelpunktes wird die Anzieleinrichtung 13 zur Änderung der Ausrichtung in horizontaler Richtung nach rechts bewegt, bis der vorgenannte andere Bildpunkt nicht mehr markiert bzw. berührt wird (beispielsweise weil nun ein weiterer anderer Displaypunkt markiert wird - und dann die Anzieleinheit mit der diesem Displaypunkt zugeordneten Richtung und Geschwindigkeit weiterverfahren bzw. weitergeändert wird - oder kein Punkt mehr markiert wird - und dann das Verfahren der Anzieleinheit gestoppt wird). Die in Figur 3 dargestellte Situation (mit dem dabei dargestellten Punkt als aktuell markierter Displaypunkt 4) entspricht etwa einer Änderung der Ausrichtung der Anzieleinheit 13 mit einer nach schräg rechts oben Ausrichtungsänderungs-Richtung (d.h. einer nach oben zeigenden Richtungsänderungs-Komponente und einer nach rechts zeigenden Richtungsänderungs-Komponente, wobei die nach oben zeigende Komponente etwas grösser gewählt ist als die nach rechts zeigende) sowie mit einer mittleren Verfahr-Geschwindigkeit. Insbesondere können dafür die Drehantriebe derart angesteuert werden, dass die Anzieleinheit gegenüber der Basis mit 60 % der maximal bereitstellbaren Schwenk-Geschwindigkeit nach oben schwenkt und mit 40 % der maximal bereitstellbaren Rotier-Geschwindigkeit um die Stehachse nach rechts dreht.

Insbesondere ist dabei das Liniennetz 3 derart aufgebaut, dass dadurch eine Vielzahl von Sektoren 7 definiert werden, insbesondere mindestens etwa 30 Sektoren, im Speziellen mindestens etwa 50 Sektoren.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

## Patentansprüche

1. Vermessungsgerät (10) zum Vermessen von Raumpunkten von Oberflächen einer Konstruktion - insbesondere Innenräumen von Gebäuden - mit
● einer Basis (11),
● einer gegenüber der Basis dreh- und schwenkbaren, Distanzmessfunktionalität bereitstellenden Anzieleinheit (13) mit einer zur Emission eines Laserstrahls (14) in Richtung einer Zielachse ausgebildeten Laserquelle und einem Laserlicht-detektor sowie mit einer in Richtung der Zielachse ausgerichteten integrierten digitalen Kamera,
● einer Auswerte- und Steuereinheit,
● einem Display zur Darstellung eines Bildes der Kamera, und
● Eingabemitteln zur Markierung von Displaypunkten auf dem Display,
wobei
● ein erster und ein zweiter Drehantrieb die Anzieleinheit (13) antreib- und ausrichtbar machen,
● eine räumliche Ausrichtung der Anzieleinheit (13) gegenüber der Basis (11) über zwei Winkelmesser erfassbar ist und
● die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen, sowie mit der Kamera verbunden ist,
**dadurch gekennzeichnet, dass**
das Konstruktionsvermessungsgerät (10) mit einer Funktionalität zur manuell steuerbaren Ausrichtungsänderung der Anzieleinheit (13) ausgestattet ist, in deren Rahmen dynamisch in Abhängigkeit von
● einer aktuellen Richtung und
● einem aktuellen Abstand
von einem definierten zentralen Anker-Displaypunkt zu einem aktuell markierten Displaypunkt die Ausrichtung der Anzieleinheit (13) durch den ersten bzw. zweiten Drehantrieb geändert wird, wobei
● die jeweils aktuelle Richtung eine Ausrichtungsänderungs-Richtung und
● der jeweils aktuelle Abstand eine
Ausrichtungsänderungs-Geschwindigkeit für das Ändern der Ausrichtung der Anzieleinheit (13) vorgibt.

2. Vermessungsgerät (10) nach Anspruch 1,
**dadurch gekennzeichnet, dass**
jener Displaypunkt als der Anker-Displaypunkt definiert ist, der die Position der Zielachse im Bild und somit einen Ziel-Bildpunkt (1) repräsentiert, insbesondere wobei dieser auf dem Display durch ein dem Bild überlagert darstellbares Fadenkreuz (2) indiziert wird.

3. Vermessungsgerät (10) nach Anspruch 2,
**dadurch gekennzeichnet, dass**
die Funktionalität aktivierbar ist durch Markieren des den Ziel-Bildpunkt (1) darstellenden Displaypunkts bzw. des Fadenkreuzes (2).

4. Vermessungsgerät (10) nach einem der vorangehenden Ansprüche,
**dadurch gekennzeichnet, dass**
das Display als ein berührungssensitiver Touch-Bildschirm ausgebildet ist, auf dem Displaypunkte durch Berührung markierbar sind, und somit die Eingabemittel bereitgestellt werden.

5. Vermessungsgerät (10) nach einem der vorangehenden Ansprüche,
**dadurch gekennzeichnet, dass**
im Rahmen der Funktionalität die Ausrichtungsänderungs-Richtung für das Ändern der Ausrichtung der Anzieleinheit (13) analog ist zur jeweils aktuellen Richtung vom Anker-Displaypunkt zum aktuell markierten Displaypunkt, wobei die Ausrichtungsänderungs-Richtung somit derart gewählt wird, dass diese
● eine nach oben gerichtete Komponente enthält - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
● eine nach unten gerichtete Komponente enthält - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
● eine nach links gerichtete Komponente enthält - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -,
● eine nach rechts gerichtete Komponente enthält - also eine Drehung der Anzieleinheit um die vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

6. Vermessungsgerät (10) nach einem der vorangehenden Ansprüche,
**dadurch gekennzeichnet, dass**
im Rahmen der Funktionalität
● die Ausrichtungsänderungs-Geschwindigkeit maximal ist, falls auch der aktuelle Abstand vom Anker-Displaypunkt zum aktuell markierten Displaypunkt maximal ist, und
● bei Zusammenfallen des aktuell markierten Displaypunkts mit dem Anker-Displaypunkt die Ausrichtungsänderungs-Geschwindigkeit gleich Null ist, d.h. dass dann in der aktuellen Ausrichtung der Anzieleinheit innegehalten wird.

7. Vermessungsgerät (10) nach einem der vorangehenden Ansprüche,
**dadurch gekennzeichnet, dass**
das Display mittels eines um den Anker-Displaypunkt angelegten virtuellen Liniennetzes (3) in virtuelle Sektoren (7) eingeteilt ist, welches durch konzentrische Kreislinien (5) um den Anker-Displaypunkt und diese Kreislinien (5) schneidende, von dem Anker-Displaypunkt ausgehende Radiallinien (6) gebildet wird, wobei die Sektoren (7) digitalisierten Werten für die Ausrichtungsänderungs-Richtung und die Ausrichtungsänderungs-Geschwindigkeit entsprechen und das Ändern der Ausrichtung der Anzieleinheit (13) mit der dem jeweiligen Sektor zugeordneten Ausrichtungsänderungs-Richtung und Ausrichtungsänderungs-Geschwindigkeit solange vollzogen wird, wie einer der innerhalb dieses Sektors liegenden Displaypunkte markiert wird, und die Ausrichtungsänderungs-Richtung und Ausrichtungsänderungs-Geschwindigkeit entsprechend geändert wird, sobald ein innerhalb eines anderen Sektors liegender Displaypunkt markiert wird, nämlich auf die dem anderen Sektor entsprechende Ausrichtungsänderungs-Richtung bzw. Ausrichtungsänderungs-Geschwindigkeit.

8. Vermessungsgerät (10) nach Anspruch 6,
**dadurch gekennzeichnet, dass**
die konzentrischen Kreislinien (5) um Anker-Displaypunkt unterschiedlichen Abständen vom aktuell markierten Displaypunkt zum Anker-Displaypunkt entsprechen, womit Ausrichtungsänderungs-Geschwindigkeitsstufen festgelegt werden, wobei die äussersten Sektoren der maximalen Ausrichtungsänderungs-Geschwindigkeit entsprechen.

9. Vermessungsgerät (10) nach Anspruch 7 oder 8,
**dadurch gekennzeichnet, dass**
das virtuelle Liniennetz (3) derart aufgebaut, dass dadurch eine Vielzahl von Sektoren (7) definiert werden, insbesondere mindestens etwa 30 Sektoren (7), im Speziellen mindestens etwa 50 Sektoren (7).

10. Verfahren zum manuell gesteuerten Ausrichten einer Anzieleinheit (13) eines Vermessungsgeräts (10) anhand eines Markierens von Displaypunkten auf einem Display, wobei das Vermessungsgerät (10) aufweist
● eine Basis (11),
● die gegenüber der Basis dreh- und schwenkbare, Distanzmessfunktionalität bereitstellende Anzieleinheit (13) mit einer zur Emission eines Laserstrahls (14) in Richtung einer Zielachse ausgebildeten Laserquelle und einem Laserlicht-detektor sowie mit einer in Richtung der Zielachse ausgerichteten integrierten digitalen Kamera,
● einer Auswerte- und Steuereinheit,
● das Display zur Darstellung eines Bildes der Kamera, und
● Eingabemitteln zur Markierung der Displaypunkte, wobei
● ein erster und ein zweiter Drehantrieb die Anzieleinheit (13) antreib- und ausrichtbar machen,
● eine räumliche Ausrichtung der Anzieleinheit (13) gegenüber der Basis (11) über zwei Winkelmesser erfassbar ist und
● die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen, sowie mit der Kamera verbunden ist,
**dadurch gekennzeichnet, dass**
fortlaufend
● eine aktuelle Richtung und
● ein aktueller Abstand
von einem definierten zentralen Anker-Displaypunkt zu einem aktuell markierten Displaypunkt bestimmt werden und ein Ändern der Ausrichtung der Anzieleinheit (13) dynamisch in Abhängigkeit von der jeweils aktuellen Richtung und dem jeweils aktuellen Abstand durch den ersten bzw. zweiten Drehantrieb erfolgt, wobei
● die jeweils aktuelle Richtung eine Ausrichtungsänderungs-Richtung und
● der jeweils aktuelle Abstand eine Ausrichtungsänderungs-Geschwindigkeit
für das Ändern der Ausrichtung der Anzieleinheit (13) vorgibt.

11. Verfahren nach Anspruch 9 oder 10,
**dadurch gekennzeichnet, dass**
jener Displaypunkt als der Anker-Displaypunkt definiert ist, der die Position der Zielachse im Bild und somit einen Ziel-Bildpunkt (1) repräsentiert, insbesondere wobei dieser auf dem Display durch ein dem Bild überlagert darstellbares Fadenkreuz (2) indiziert wird.

12. Verfahren nach einem der Ansprüche 9 bis 11,
**dadurch gekennzeichnet, dass**
die Ausrichtungsänderungs-Richtung für das Ändern der Ausrichtung der Anzieleinheit (13) analog gewählt wird zur jeweils bestimmten aktuellen Richtung vom Anker-Displaypunkt zum aktuell markierten Displaypunkt, wobei
● die Ausrichtungsänderungs-Richtung eine nach oben gerichtete Komponente enthält - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
● die Ausrichtungsänderungs-Richtung eine nach unten gerichtete Komponente enthält - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
● die Ausrichtungsänderungs-Richtung eine nach links gerichtete Komponente enthält - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -, und
● die Ausrichtungsänderungs-Richtung eine nach rechts gerichtete Komponente enthält - also eine Drehung der Anzieleinheit um eine vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

13. Verfahren nach einem der Ansprüche 9 bis 12,
**dadurch gekennzeichnet, dass**
● die Ausrichtungsänderungs-Geschwindigkeit maximal ist, falls der aktuelle Abstand vom aktuell markierten Displaypunkt zum Anker-Displaypunkt maximal ist, und
● bei Zusammenfallen des aktuell markierten Displaypunkts mit dem Anker-Displaypunkt die Ausrichtungsänderungs-Geschwindigkeit gleich Null ist, d.h. dass dann in der aktuellen Ausrichtung der Anzieleinheit innegehalten wird.

14. Verfahren nach einem der Ansprüche 9 bis 13,
**dadurch gekennzeichnet, dass**
das Display mittels eines um den Anker-Displaypunkt angelegten virtuellen Liniennetzes (3) in virtuelle Sektoren (7) eingeteilt ist, welches durch konzentrische Kreislinien (5) um den Anker-Displaypunkt und diese Kreislinien (5) schneidende, von dem Anker-Displaypunkt ausgehende Radiallinien (6) gebildet wird, wobei die Sektoren (7) digitalisierten Werten für die Ausrichtungsänderungs-Richtung und die Ausrichtungsänderungs-Geschwindigkeit entsprechen und das Ändern der Ausrichtung der Anzieleinheit (13) mit der dem jeweiligen Sektor zugeordneten Ausrichtungsänderungs-Richtung und Ausrichtungsänderungs-Geschwindigkeit solange vollzogen wird, wie einer der innerhalb dieses Sektors liegenden Displaypunkte markiert wird, und die Ausrichtungsänderungs-Richtung und Ausrichtungsänderungs-Geschwindigkeit entsprechend geändert wird, sobald ein innerhalb eines anderen Sektors liegender Displaypunkt markiert wird, nämlich auf die dem anderen Sektor entsprechende Ausrichtungsänderungs-Richtung bzw. Ausrichtungsänderungs-Geschwindigkeit.

15. Computerprogrammprodukt mit Programmcode, der auf einem maschinenlesbaren Träger gespeichert ist, zur Durchführung des Verfahrens zum manuell gesteuerten Ausrichten einer Anzieleinheit (13) eines Vermessungsgeräts (10) anhand eines Markierens von Displaypunkten auf einem Display nach einem der Ansprüche 10 bis 14, insbesondere wenn das Programm auf einer als Auswerte- und Steuereinheit des Vermessungsgeräts (10) nach einem der Ansprüche 1 bis 9 ausgebildeten elektronischen Datenverarbeitungseinheit ausgeführt wird.
